(19) Europäisches Patentamt / European Patent Office / Office européen des brevets

(11) **EP 4 528 308 A1**

(12) **DEMANDE DE BREVET EUROPEEN**

(43) Date de publication:
**26.03.2025   Bulletin 2025/13**

(21) Numéro de dépôt: **24200598.1**

(22) Date de dépôt: **16.09.2024**

(51) Classification Internationale des Brevets (IPC):
**G01S 3/74** *(2006.01)*          **G01S 3/80** *(2006.01)*

(52) Classification Coopérative des Brevets (CPC):
**G01S 3/74; G01S 3/8006;** G01S 3/10; G01S 3/86

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité:  **21.09.2023  FR 2310004**

(71) Demandeur: **THALES**
**92190 Meudon (FR)**

(72) Inventeurs:
• **DELMER, Alice**
  **92622 GENNEVILLIERS Cedex (FR)**
• **FERREOL, Anne**
  **92622 GENNEVILLIERS Cedex (FR)**

(74) Mandataire: **Atout PI Laplace**
**Immeuble Up On**
**25 Boulevard Romain Rolland**
**CS 40072**
**75685 Paris Cedex 14 (FR)**

(54) **PROCÉDÉ DE DÉTERMINATION DE LA DIRECTION D'ARRIVÉE DES TRAJETS DE SIGNAUX SUR UN RÉSEAU DE N CAPTEURS, PROGRAMME D'ORDINATEUR ET DISPOSITIF ASSOCIÉS**

(57)      L'invention concerne un procédé de détermination de la direction d'arrivée des trajets de signaux sur un réseau (2) de N capteurs (3), comprenant une première estimation, par goniométrie parcimonieuse, du vecteur $\gamma$ vérifiant l'équation :

$$vec(\mathbf{R}_x) - \sigma^2 vec(\mathbf{I}_N) = \mathbf{B}\gamma$$

où $\sigma^2$ est le niveau du bruit, $R_x$ est la matrice de covariance vectorisée du signal x(t) considéré en sortie du réseau de capteurs et B est la table de calibration du réseau,

$$\mathbf{B} = \begin{bmatrix} \mathbf{b}(\Theta_1) & \cdots & \mathbf{b}(\Theta_Q) \end{bmatrix}$$

$$\mathbf{b}(\Theta) = \mathbf{a}^*(\Theta) \otimes \mathbf{a}(\Theta)$$

et une déduction des directions d'arrivée des trajets basée sur cette première estimation;
puis une deuxième estimation du vecteur $\gamma$ vérifiant

$$vec(R_x) - \sigma^2 vec(I_N) = \tilde{B}\tilde{\gamma}$$

avec

$$\tilde{B} = \begin{bmatrix} \mathbf{B} & \Delta\mathbf{B} \end{bmatrix} \quad et \quad \tilde{\gamma} = \begin{bmatrix} \gamma \\ \rho \end{bmatrix}$$

avec $\Delta$B composée de termes croisés $a^*(\Theta_i) \otimes a(\Theta_j)$, pour des directions d'arrivée définies en fonction des directions d'arrivée déduites
- une deuxième estimation des directions d'arrivée des trajets fonction de cette deuxième estimation du vecteur $\gamma$.

[Fig. 1]

EP 4 528 308 A1

**Description**

Domaine technique :

L'invention se situe dans le domaine de la goniométrie, qui est la détermination de la direction d'arrivée de signaux électromagnétiques (radio-électriques ou sonores). Elle concerne plus spécifiquement l'estimation de la direction d'arrivée de signaux incidents sur un réseau de plusieurs capteurs (quand les signaux sont radio-électriques par exemple, les capteurs sont des antennes) dont les caractéristiques sont connues. Les signaux incidents peuvent provenir d'un ou plusieurs émetteurs. Pour un même émetteur, le signal émis peut être reçu selon plusieurs trajets de propagation, donnant lieu à plusieurs signaux incidents sur le réseau de capteurs. L'invention vise à réaliser cette estimation y compris quand les signaux incidents ont la caractéristique d'être temporellement corrélés (ce qui peut être le cas lorsque les signaux sont des multi-trajets du même émetteur) et que les émetteurs, par exemple en grand nombre, génèrent au total un nombre de trajets potentiellement supérieur au nombre de capteurs du réseau de capteurs.

Les situations de multi-trajets donnant lieu à la présence de trajets corrélés sont rencontrées par exemple en milieu urbain dans les réseaux GSM (Global System for Mobile Communications) ou LTE (Long Term Evolution), du fait des réflexions sur des bâtiments, ou encore dans le cadre de communications ionosphériques HF (Hautes Fréquences).

Technique antérieure :

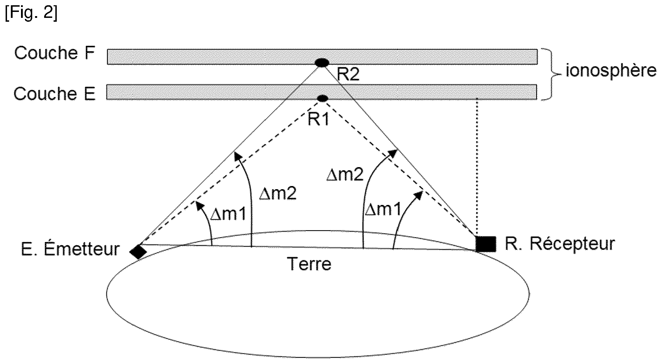

Pour les multi-trajets corrélés dans le cas HF par exemple, les signaux de chacun des émetteurs se propagent suivant plusieurs trajets se réfléchissant sur les couches ionosphériques (en un point R1 sur la couche E et en un point R2 sur la couche F), comme illustré en figure 2. Dans le cas particulier HF, les différents trajets d'un émetteur de position E arrivent généralement sur un récepteur R avec le même gisement $\theta_m$ et des angles d'élévations $\Delta_{mp}$ différents. Dans les multi-trajets des cas GSM ou LTE par exemple, les différents trajets d'un émetteur de position E arrivent généralement sur un récepteur R avec des gisements $\theta_{mp}$ différents et des angles d'élévations $\Delta_{mp}$ différents.

En figure 2, le nombre de trajets représentés entre l'émetteur E et le récepteur R est égal à 2 : p =1,2.

Des trajets arrivent au récepteur R avec des temps de propagation différents qui sont proportionnels à la distance parcourue. On aura ainsi des trajets corrélés lorsque la différence de temps de propagation entre deux trajets est inversement proportionnelle à la bande passante de l'émetteur. C'est ainsi que les trajets depuis un émetteur en HF sont souvent corrélés entre eux. D'autre part, les techniques de goniométrie classiques nécessitent de réaliser des intercepteurs avec des sous-bandes relativement faibles de manière à ce que le nombre de trajets incidents par sous-bande soit très inférieur au nombre d'antennes du réseau d'antennes.

Certaines techniques de goniométrie parcimonieuse 1D (i.e. estimation du gisement uniquement, en supposant l'élévation nulle) permettent d'estimer (ou « goniométrer ») l'incidence de potentiellement plus de trajets que d'antennes du réseau. Avec ces techniques, un intercepteur pourrait ainsi être mis en oeuvre avec largement moins de sous-bandes et donc avec des bandes instantanées de traitement beaucoup plus larges. Toutefois elles ne traitent pas le problème de la goniométrie 2D (avec estimation conjointe du gisement et de l'élévation) pour une géométrie de réseau quelconque et elles sont adaptées uniquement au cas de trajets décorrélés.

L'algorithme MUSIC, lui, permet d'estimer la direction d'arrivée de plusieurs trajets corrélés à condition qu'ils ne soient pas cohérents (trajets dont la différence de temps d'arrivée est quasiment nulle en étant très inférieur à l'inverse de la bande passante du signal) et qu'ils ne dépassent pas le nombre d'antennes du réseau. D'autre part, l'algorithme nécessite un temps d'observation du signal important pour bien estimer les directions des trajets corrélés. Cette durée d'observation nécessaire augmente avec le taux de corrélation des trajets.

Il existe donc un besoin d'une solution de détermination des incidences 2D dans les situations de canaux de propagation à multi-trajets corrélés, tels que rencontrés notamment dans les communications en milieu urbain, dans les bandes VHF/UHF notamment, ou dans les communications de type ionosphérique HF, avec un nombre de trajets incidents supérieur au nombre d'antennes du réseau d'antennes, et qui ne présentent pas les inconvénients de l'art antérieur.

Résumé de l'invention :

A cet effet, suivant un premier aspect, la présente invention décrit un procédé de détermination de la direction d'arrivée des trajets de signaux sur un réseau de N capteurs, avec $N \geq 2$ et selon lequel :
ledit procédé est mis en oeuvre par un dispositif électronique de détermination de la direction d'arrivée des trajets et comprend les étapes suivantes, dans une première phase :

- i.1/ première estimation, par goniométrie parcimonieuse, du vecteur $\gamma$ vérifiant l'équation :

$$vec(\mathbf{R}_x) - \sigma^2 vec(\mathbf{I}_N) = \mathbf{B}\boldsymbol{\gamma}$$

où $\mathbf{I}_N$ est la matrice identité de taille NxN, $\sigma^2$ est le niveau du bruit et $\mathbf{R}_x$ est la matrice de covariance vectorisée du signal x(t) considéré en sortie du réseau de capteurs, avec, si $x_n(t)$ est le signal en sortie du $n^{ième}$ capteur :

$$\mathbf{x}(t) = \begin{bmatrix} x_1(t) \\ \vdots \\ x_N(t) \end{bmatrix};$$

et B est la table de calibration du réseau, telle que, le vecteur $\mathbf{a}(\Theta)$, de dimension $N$X1, étant la réponse, connue, du réseau de capteurs à un signal reçu de direction d'arrivée $\Theta$ et Q étant le nombre maximum de directions d'arrivée distinctes possibles considérées :

$$\mathbf{B} = \begin{bmatrix} \mathbf{b}(\Theta_1) & \cdots & \mathbf{b}(\Theta_Q) \end{bmatrix}$$

avec

$$\mathbf{b}(\Theta) = \mathbf{a}^*(\Theta) \otimes \mathbf{a}(\Theta)$$

- i.2/ dans une première estimation des directions d'arrivée des trajets, si la $q^{ème}$ composante de la première estimation du vecteur $\gamma$ est non nulle, alors la direction d'arrivée $\Theta_q$ correspondant à la $q^{ème}$ composante, $b(\Theta_q)$, de B est estimée comme direction d'arrivée d'un trajet reçu ;

ledit procédé étant caractérisé en ce qu'il comprend en outre, dans une deuxième phase, les étapes suivantes :

- j.1/ deuxième estimation du vecteur $\gamma$ en déterminant par goniométrie parcimonieuse, vérifiant cette fois l'équation :

$$vec(R_x) - \sigma^2 vec(I_N) = \tilde{B}\tilde{\gamma}$$

avec

$$\tilde{\mathbf{B}} = \begin{bmatrix} \mathbf{B} & \Delta\mathbf{B} \end{bmatrix} \quad \text{et } \tilde{\gamma} = \begin{bmatrix} \gamma \\ \rho \end{bmatrix}$$

$\Delta B = [a^*(\Theta_i) \otimes a(\Theta_j) \dots]$, composée des termes croisés $a^*(\Theta_i) \otimes a(\Theta_j)$, avec $i \neq j$, pour un ensemble de directions d'arrivée sélectivement définies en fonction des directions d'arrivée estimées, à l'étape i.2, comme direction d'arrivée d'un trajet reçu ;

- j.2/ dans une deuxième estimation des directions d'arrivée des trajets, pour chaque composante non nulle de la deuxième estimation du vecteur $\gamma$ une direction d'arrivée de trajets est déterminée de la façon suivante :

si la $q^{ème}$ composante de la deuxième estimation de $\gamma$ est non nulle, alors l'incidence $\Theta_q$ correspondant à la $q^{ème}$ composante de B, $b(\Theta_q)$, est estimée comme direction d'arrivée d'un trajet reçu.

L'invention permet ainsi de déterminer les incidences dans les situations de canaux de propagation à multi-trajets corrélés, et ceci avec un nombre de trajets incidents inférieur ou supérieur au nombre de capteurs (par exemples d'antennes) du réseau de capteurs, la solution nécessitant en outre un temps de calcul et une puissance de calcul réduits.

La première phase utilisant la table de calibration B et supposant que les trajets reçus sont décorrélés permet de connaître approximativement les directions de ces derniers et ainsi de réduire dans la deuxième phase, la taille nécessaire de la table de calibration étendue [B ΔB] du modèle parcimonieux en présence de trajets corrélés, pour estimer plus précisément leurs directions.

La solution proposée permet d'exploiter les avantages du modèle de la matrice de covariance vectorisée en présence de trajets corrélés qui permettent de :

- potentiellement traiter plus de trajets que d'antennes du réseau de goniométrie

- travailler avec des réseaux de goniométrie ayant un nombre d'antennes plus faible ; et
- ne nécessite pas la détection du nombre de trajets.

La solution proposée permet en outre de déterminer les directions d'arrivées de trajets provenant d'émetteurs non « maîtrisés », i.e. dont on ne connaît pas, ou au mieux de façon imparfaite, la norme du signal émis.

Dans des modes de réalisation, un tel procédé comprendra en outre l'une au moins des caractéristiques suivantes :

- $\Delta B = [a^*(\Theta_i) \otimes a(\Theta_j) \ldots]$ est composée des termes croisés $a^*(\Theta_i) \otimes a(\Theta_j)$, avec $i \neq j$, pour un ensemble de directions d'arrivée sélectivement définies en fonction d'un voisinage prédéfini des directions d'arrivée estimées, à l'étape i.2, comme direction d'arrivée d'un trajet reçu ;
- il est déterminé à l'issue de l'étape j.2 de l'itération courante si :

$$\left\| \mathbf{y} - \tilde{\mathbf{B}} \tilde{\gamma} \right\| > \eta$$

la valeur de la constante $\eta$ étant prédéfinie et si cette condition n'est pas vérifiée, une nouvelle itération des étapes j.1 et j.2 est effectuée, en prenant comme première estimation des directions d'arrivée de la nouvelle itération la deuxième estimation des directions d'arrivée déterminée à l'itération courante ;
- l'estimation de la direction d'arrivée comprend l'estimation d'un angle d'élévation et d'un angle de gisement ;
- ledit procédé comprend comprenant au moins une des dispositions suivantes :

  - le nombre de trajets est supérieur au nombre N de capteurs ;
  - des trajets sont corrélés temporellement entre eux.

Suivant un autre aspect, l'invention décrit un programme d'ordinateur destiné à être stocké dans la mémoire d'un bloc électronique de traitement et comprenant en outre un microcalculateur, ledit programme d'ordinateur comprenant des instructions qui, lorsqu'elles sont exécutées sur le microcalculateur, mettent en oeuvre les étapes d'un procédé de détermination de la direction d'arrivée des trajets de signaux sur un réseau de N capteurs suivant le premier aspect de l'invention.

L'invention décrit également un support non transitoire lisible par ordinateur stockant un tel programme informatique.

Suivant un autre aspect, l'invention décrit un dispositif électronique de détermination de la direction d'arrivée des trajets sur un réseau de N capteurs, avec $N \geq 2$, ledit dispositif étant adapté, dans une première phase, pour déterminer une première estimation, par goniométrie parcimonieuse, du vecteur $\gamma$ vérifiant l'équation :

$$vec\left(\mathbf{R}_x\right) - \sigma^2 vec\left(\mathbf{I}_N\right) = \mathbf{B}\gamma$$

où $\mathbf{I}_N$ est la matrice identité de taille NxN, $\sigma^2$ est le niveau du bruit et $\mathbf{R}_x$ est la matrice de covariance vectorisée du signal x(t) considéré en sortie du réseau de capteurs, avec, si $x_n(t)$ est le signal en sortie du $n^{ième}$ capteur :

$$\mathbf{x}(t) = \begin{bmatrix} x_1(t) \\ \vdots \\ x_N(t) \end{bmatrix};$$

et B est la table de calibration du réseau, telle que, le vecteur $\mathbf{a}(\Theta)$, de dimension $NX1$, étant la réponse, connue, du réseau de capteurs à un signal reçu de direction d'arrivée $\Theta$ et Q étant le nombre maximum de directions d'arrivée distinctes possibles considérées :

$$\mathbf{B} = \begin{bmatrix} \mathbf{b}\left(\Theta_1\right) & \cdots & \mathbf{b}\left(\Theta_Q\right) \end{bmatrix}$$

avec

$$\mathbf{b}(\Theta) = \mathbf{a}^{*}(\Theta) \otimes \mathbf{a}(\Theta)$$

ledit dispositif étant alors adapté pour, dans ladite première phase, dans une première estimation des directions d'arrivée des trajets, si la $q^{\text{ème}}$ composante de la première estimation du vecteur $\gamma$ est non nulle, estimer alors la direction d'arrivée $\Theta_q$ correspondant à la $q^{\text{ème}}$ composante, $b(\Theta_q)$, de B comme direction d'arrivée d'un trajet reçu ; ledit dispositif étant caractérisé en ce qu'il est adapté pour, dans une deuxième phase, déterminer une deuxième estimation du vecteur $\gamma$ par goniométrie parcimonieuse, vérifiant cette fois l'équation :

$$vec(R_x) - \sigma^2 vec(I_N) = \tilde{B}\tilde{\gamma}$$

avec

$$\tilde{\mathbf{B}} = \begin{bmatrix} \mathbf{B} & \Delta\mathbf{B} \end{bmatrix} \text{ et } \tilde{\gamma} = \begin{bmatrix} \gamma \\ \rho \end{bmatrix}$$

$\Delta B = [a^{*}(\Theta_i) \otimes a(\Theta_j) \ldots ]$, composée des termes croisés $a^{*}(\Theta_j) \otimes a(\Theta_j)$, avec $i \neq j$ , pour un ensemble de directions d'arrivée sélectivement définies en fonction des directions d'arrivée estimées, dans la première phase, comme direction d'arrivée d'un trajet reçu ;
ledit dispositif est adapté pour, dans ladite deuxième phase, déterminer, dans une deuxième estimation des directions d'arrivée des trajets, pour chaque composante non nulle de la deuxième estimation du vecteur $\gamma$, une direction d'arrivée de trajets de la façon suivante :
si la $q^{\text{ème}}$ composante de la deuxième estimation de $\gamma$ est non nulle, alors l'incidence $\Theta_q$ correspondant à la $q^{\text{ème}}$ composante de B, $b(\Theta_q)$, est estimée comme direction d'arrivée d'un trajet reçu.

Dans des modes de réalisation, un tel dispositif comprendra en outre l'une au moins des caractéristiques suivantes :

- $\Delta B = [ a^{*}(\Theta_i) \otimes a(\Theta_j) \ldots 1$ est composée des termes croisés $a^{*}(\Theta_i) \otimes a(\Theta_j)$, avec $i \neq j$, pour un ensemble de directions d'arrivée sélectivement définies en fonction d'un voisinage prédéfini des directions d'arrivée estimées, dans ladite première estimation des directions d'arrivée des trajets en ladite première phase, comme direction d'arrivée d'un trajet reçu ;

- ledit dispositif est adapté pour déterminer à l'issue de ladite deuxième estimation des directions d'arrivée des trajets de l'itération courante si :

$$\left\| \mathbf{y} - \tilde{\mathbf{B}}\tilde{\gamma} \right\| > \eta$$

la valeur de la constante $\eta$ étant prédéfinie et si cette condition n'est pas vérifiée, le dispositif effectue une nouvelle itération de la deuxième phase, en prenant comme première estimation des directions d'arrivée de la nouvelle itération la deuxième estimation des directions d'arrivée déterminée à l'itération courante ;

- l'estimation de la direction d'arrivée par ledit dispositif comprend l'estimation d'un angle d'élévation et d'un angle de gisement.

Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple.

[Fig. 1] La figure 1 représente schématiquement un système de goniométrie 1 dans un mode de réalisation de l'invention ;

[Fig. 2] La figure 2 illustre un exemple de canal de propagation multi-trajet en HF;

[Fig. 3] La figure 3 illustre un des modèles utilisés dans un procédé de goniométrie dans un mode de réalisation de l'invention ;

[Fig. 4] La figure 4 représente des étapes d'un procédé de goniométrie dans un mode de réalisation de l'invention.

Des références identiques peuvent être utilisées dans des figures différentes lorsqu'elles désignent des éléments identiques ou comparables.

Description détaillée :

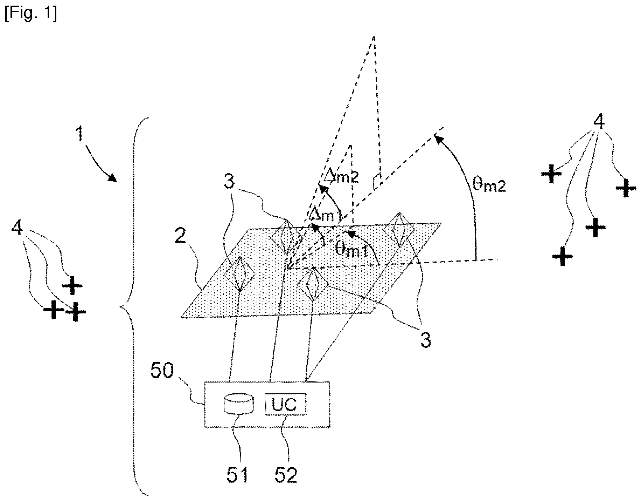

La figure 1 représente schématiquement un système de goniométrie 1 dans un mode de réalisation de l'invention, comportant un réseau de goniométrie 2 et un bloc électronique de traitement 50.

Le réseau de goniométrie 2 est un réseau de capteurs de signaux électromagnétiques, typiquement des signaux radiofréquences (RF) ou sonores. Dans l'exemple considéré ici, les signaux sont radiofréquences et le réseau de goniométrie 2 est un réseau d'antennes qui comporte N antennes de réception 3 (N≥2 pour un fonctionnement en 1 dimension (1D) et N≥3 pour un fonctionnement en 2 dimensions (2D) >) disposées sur un support, ici au sol. Chaque antenne 3 est adaptée pour recevoir des signaux radiofréquences incidents (les trajets) en la position de l'antenne et les convertir en signaux électriques représentatifs des signaux incidents reçus. Les dispositions relatives des antennes 3 dépendent du type de signaux RF. Chaque signal RF incident est un signal dont la source d'émission est un émetteur radiofréquence 4 (par exemple un téléphone mobile).

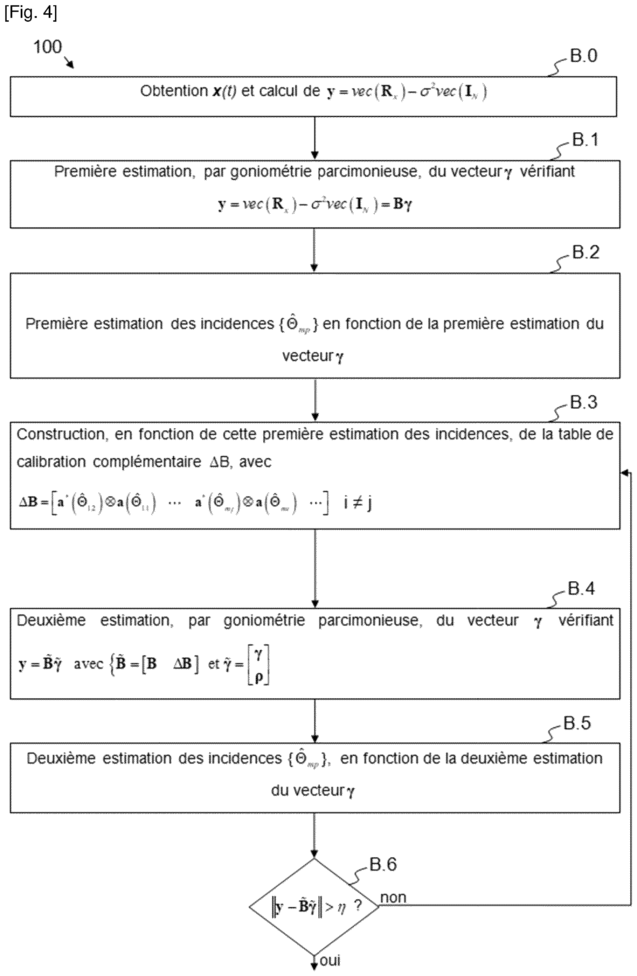

Le bloc de traitement 50 est adapté pour recevoir les signaux électriques en provenance des différentes antennes 3 du réseau d'antennes 2, pour effectuer des traitements du signal sur ces signaux et pour déterminer les directions d'arrivée, encore appelées « incidences »), définie par le gisement et l'élévation du trajet, de chacun des trajets reçus par les antennes 3, en mettant en oeuvre les étapes décrites plus bas en référence à la figure 4.

Le gisement $\theta_{mp}$ correspond à l'angle de la direction d'arrivée projetée dans le plan horizontal (le plan horizontal est le plan tangent à la surface de la Terre en la localisation du réseau d'antennes) par rapport à un axe de référence du réseau de capteurs. L'élévation $\Delta_{mp}$ correspond à l'angle formé entre le plan horizontal et la direction d'arrivée. L'élévation peut également être appelée angle de site.

Dans un mode de réalisation, le bloc de traitement 50 comporte une mémoire 51 et un microprocesseur 52, et la mémoire 51 compte des instructions logicielles qui lorsqu'exécutées par le microprocesseur 52, mettent en oeuvre les étapes incombant au bloc de traitement 50 et décrites plus bas en référence à la figure 4.

Les trajets reçus proviennent d'un ensemble de $M$ émetteurs 4. Le nombre M est a priori non connu, comme le nombre de multi-trajets reçus en provenance d'un même émetteur.

On considère que l'on est en présence a priori de trajets temporellement corrélés entre eux.

Modélisation du signal reçu sur le réseau de goniométrie et déduction de la structure de la matrice de covariance vectorisée :
En présence de $M$ émetteurs ayant chacun $P_m$ trajets, m =1 à M, le signal en sortie du réseau 2 des $N$ antennes 3 du réseau de goniométrie 1 s'écrit de la façon suivante :

[Math. 1]

$$\mathbf{x}(t) = \begin{bmatrix} x_1(t) \\ \vdots \\ x_N(t) \end{bmatrix} = \sum_{m=1}^{M} \sum_{p=1}^{P_m} \rho_{mp} \mathbf{a}\left(\Theta_{mp}\right) s_m\left(t - \tau_{mp}\right) + \mathbf{n}(t)$$

où $x_n(t)$ est le signal en sortie de la $n^{ième}$ antenne, $s_n(t)$ le signal du $m^{ième}$ émetteur 4 et n(t) le vecteur bruit. Les signaux de chacun des émetteurs 4 sont supposés décorrélés (i.e. les signaux d'un quelconque des émetteurs 4 sont supposés décorrélés des signaux d'un quelconque autre des émetteurs 4).

Le vecteur $\mathbf{a}(\Theta)$, de dimension $N$X1, caractérise la relation entre le signal mesuré par le réseau d'antennes $x(t)$ et le signal incident unitaire $s(t - \tau)$ de direction d'arrivée $\Theta$. On l'appelle *réponse* du réseau de goniométrie 2 à un signal reçu d'incidence $\Theta$, où $\Theta = (\theta, \Delta)$, $\theta$ étant le gisement et $\Delta$ l'élévation. Cette réponse est connue ; elle a par exemple été déterminée dans une phase préalable, soit par calcul, soit par calibration expérimentale, pour une valeur de $\Theta$ continue quelconque ou alors pour un ensemble prédéterminé de valeurs d'incidence. Par exemple, pour un réseau où la réponse

$$a(\Theta) = \begin{bmatrix} a_1(\Theta) \\ \vdots \\ a_N(\Theta) \end{bmatrix}$$

ne dépend que de la position des capteurs, le vecteur a(0) établi par calcul s'écrit : avec

$$a_n(\theta) = \exp(-j \, \frac{2\pi}{\lambda} \, k^T(\Theta)D_n)$$

, où $k(\Theta)$ est le vecteur de direction d'onde et $D_n$ la position du $n^{\text{ième}}$ capteur.

Le $p^{\text{ième}}$ trajet du $m^{\text{ième}}$ émetteur 4 est caractérisé par son incidence $\Theta_{mp} = (\theta_{mp}, \varDelta_{mp})$, son retard de propagation $\tau_{mp}$ et son amplitude $\rho_{mp}$ (dans le cas particulier HF, on rappelle que le gisement des différents trajets de l'émetteur est le même pour les différents trajets).

Le signal radioélectrique $s_m(t)$ d'amplitude complexe, de bande $B_m$ et de fréquence centrale $f_m$ s'exprime par exemple sous la forme :

$$s_m(t) = \alpha_m(t) \, e^{j2\pi f_m t}$$

Le taux de corrélation entre deux trajets (d'indices $p, q$) du $m^{\text{ième}}$ émetteur 4 peut s'approximer par :

[Math. 2]

$$\gamma_{pq}{}^m = E\left[ \left( \rho_{mp} s_m(t - \tau_{mp}) \right) \left( \rho_{mq} s_m(t - \tau_{mq}) \right)^* \right] \approx \rho_{mp} \rho_{mq}{}^* \frac{\sin\left( \pi B_m \left( \tau_{mq} - \tau_{mp} \right) \right)}{\pi B_m \left( \tau_{mq} - \tau_{mp} \right)}$$

où $B_m$ est la bande passante de cet émetteur, $E[\ ]$ est l'espérance mathématique et * désigne le conjugué.

Ainsi, on considère que deux trajets, d'indices p, q, du $m^{\text{ième}}$ émetteur 4 sont corrélés si :

[Math. 3]

$$\left| \tau_{mq} - \tau_{mp} \right| \leq \frac{1}{B_m}$$

En HF, où la bande passante est souvent de l'ordre de 3kHz, les trajets sont alors corrélés lorsque la différence de temps d'arrivée est inférieure à 0.33ms. On remarque par ailleurs que $\gamma_{pp}{}^m$ est la puissance du $p^{\text{ième}}$ trajet tel que $\gamma_{pp}{}^m = |\rho_{mp}|^2$.

Le modèle de l'équation (1) peut se réécrire de la manière suivante

[Math. 4]

$$x(t) = \sum_{m=1}^{M} A_m S_m(t) + n(t) \quad \text{avec} \quad \begin{cases} A_m = \begin{bmatrix} a(\Theta_{m1}) & \cdots & a(\Theta_{mP_m}) \end{bmatrix} \\ S_m(t) = \begin{bmatrix} \rho_{m1} \times s_m(t - \tau_{m1}) \\ \vdots \\ \rho_{mP_m} \times s_m(t - \tau_{mP_m}) \end{bmatrix} \end{cases}$$

En supposant que le bruit soit décorrélé des signaux des émetteurs 4 et qu'il soit blanc spatialement avec $E[n(t) n^H(t)] = \sigma^2 I_N$ où $I_N$ matrice identité de taille NxN et $H$ définit l'opérateur de transposé et conjugué ($\sigma^2$ est donc le niveau du bruit), la matrice de covariance des signaux reçus s'écrit alors :

[Math. 5]

$$\mathbf{R}_x = E\left[\mathbf{x}(t)\mathbf{x}^H(t)\right] = \sum_{m=1}^{M} \mathbf{A}_m \mathbf{R}_{Sm} \mathbf{A}_m^{\ H} + \sigma^2 \mathbf{I}_N$$

$$\text{avec } \mathbf{R}_{Sm} = E\left[\mathbf{S}_m(t)\mathbf{S}_m^H(t)\right] = \begin{bmatrix} \gamma_{11}^{\ m} & \gamma_{12}^{\ m} & \cdots \\ \gamma_{21}^{\ m} & \gamma_{22}^{\ m} & \\ \vdots & & \ddots \end{bmatrix}$$

En pratique la matrice de covariance est estimée à partir de $K$ échantillons temporels de la manière suivante :

[Math. 6]

$$\hat{\mathbf{R}}_x = \frac{1}{K} \sum_{k=1}^{K} \mathbf{x}(t_k)\mathbf{x}^H(t_k)$$

Dans ce qui suit, la matrice de covariance vectorisée est utilisée :

[Math. 7]

$$vec\left(\mathbf{R}_x\right) = \begin{bmatrix} \mathbf{R}_x(:,1) \\ \vdots \\ \mathbf{R}_x(:,N) \end{bmatrix} \text{ avec } \mathbf{R}_x(:,n) = \begin{bmatrix} \mathbf{R}_x(1,n) \\ \vdots \\ \mathbf{R}_x(N,n) \end{bmatrix}$$

D'après les équations (4)(5) on peut montrer que :

[Math. 8]

$$vec\left(\mathbf{R}_x\right) = \sum_{m=1}^{M} \sum_{p,q=1}^{P_m} \gamma_{pq}^{\ m} \mathbf{a}^*\left(\Theta_{mq}\right) \otimes \mathbf{a}\left(\Theta_{mp}\right) + \sigma^2 vec\left(\mathbf{I}_N\right)$$

où $\otimes$ désigne le produit de Kronecker. Cette dernière expression peut se réécrire de manière suivante :

[Math. 9]

$$vec\left(\mathbf{R}_x\right) = \sum_{m=1}^{M} \sum_{p=1}^{P_m} \gamma_{pp}^{\ m} \mathbf{b}\left(\Theta_{mp}\right) + \mathbf{e} + \sigma^2 vec\left(\mathbf{I}_N\right)$$

$$\text{avec } \begin{cases} \mathbf{e} = \sum_{m=1}^{M} \sum_{i \neq j} \gamma_{ij}^{\ m} \mathbf{a}^*\left(\Theta_{mj}\right) \otimes \mathbf{a}\left(\Theta_{mi}\right) \\ \mathbf{b}(\Theta) = \mathbf{a}^*(\Theta) \otimes \mathbf{a}(\Theta) \end{cases}$$

où l'amplitude du vecteur e dépend du niveau de corrélation entre les trajets.

D'après l'équation 9 et pour l'exemple de a(0) donné précédemment, on en déduit que dans cette configuration, b(0) est un vecteur de dimension $N^2$ dont la ($n'$) $^{\text{ème}}$ composante s'exprime $b_{n'}(\Theta) = \exp(-j\,\frac{2\pi}{\lambda}\,k^T(\Theta)D_{n'})$

avec $D_{n'} = D_n - D_{k+1}$, où $n = n'\bmod N$ et $k = \lfloor n'/N \rfloor$. Le vecteur b(0) correspond donc à la réponse d'un réseau virtuel où les antennes seraient positionnées aux positions $D_{n'}$.

On considère un échantillonnage de l'espace d'incidence du réseau d'antennes selon une grille 2D de gisements $\theta_q$ et d'élévations $\Delta_q$ contenant Q incidences potentielles notées $\Theta_q$ pour $1 \le q \le Q$, avec $0 \le \theta_q < 360°$ et $0 \le \Delta_q < 90°$.

Par exemple, on pourra prendre un pas de grille fixe de 4° selon chacun des angles ; Q est alors égal à 90x22.

On note alors B la table de calibration suivante :

[Math. 10]

$$B = \begin{bmatrix} b(\Theta_1) & \cdots & b(\Theta_Q) \end{bmatrix} \text{ avec}$$

- en première approximation, on suppose que pour chaque incidence $\Theta_{mp}$ de trajet reçu par le réseau d'antennes, il existe un indice q compris entre 1 et Q tel que $\Theta_{mp} = \Theta_q$ ; ce sont ces incidences-là, parmi les Q incidences possibles, qu'il va s'agir d'identifier. On notera ces indices $q_{mp}$ dans les équations 10 et 11 :

$$\Theta_{mp} = \Theta_{q_{mp}} \text{ pour } \begin{cases} 1 \le m \le M \\ 1 \le p \le P_m \end{cases}$$

Dans la pratique, $\Theta_{q_{mp}}$ sera l'incidence la plus proche de $\Theta_{mp}$ dans la grille des Q incidences possibles.

On en déduit que

[Math. 11]

$$vec(\mathbf{R}_x) = \mathbf{B}\boldsymbol{\gamma} + \mathbf{e} + \sigma^2 vec(\mathbf{I}_N) \quad \text{avec} \begin{cases} \gamma(q_{mp}) = \gamma_{pp}{}^m \text{ pour } \begin{cases} 1 \le m \le M \\ 1 \le p \le P_m \end{cases} \\ \gamma(q) = 0 \text{ sinon} \end{cases}$$

On obtient un modèle parcimonieux de la matrice de covariance vectorisée perturbé par un bruit $e + \sigma^2 vec(I_N)$ dépendant des niveaux $\gamma_{ij}{}^m$ de corrélation entre les trajets de chacun des émetteurs 4 ainsi que du niveau $\sigma^2$ du bruit.

La matrice de covariance vectorisée $vec(\mathbf{R}_x)$ pourrait s'écrire de la manière suivante :

[Math. 12]

$$vec(\mathbf{R}_x) = \sum_{m=1}^{M} (\mathbf{A}_m{}^* \otimes \mathbf{A}_m) \boldsymbol{\gamma}_m + \sigma^2 \mathbf{I}_N \quad \text{avec } \boldsymbol{\gamma}_m = vec(\mathbf{R}_{Sm})$$

Principe de la goniométrie parcimonieuse

Le domaine de l'estimation parcimonieuse à partir d'un modèle d'observation. regroupe les principes mathématiques permettant de résoudre un système d'équations ayant plus d'inconnues que d'équations sachant que la plupart des inconnues sont nulles.

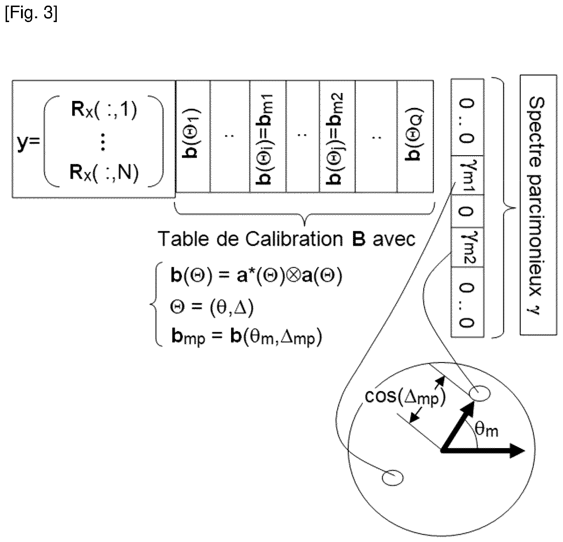

L'objectif de la goniométrie parcimonieuse, dans une configuration de trajets non corrélés, est de résoudre le système d'équations $y = vec(\mathbf{R}_x) - \sigma^2 vec(\mathbf{I}_N) = \mathbf{B}\gamma$ pour estimer le vecteur parcimonieux $\gamma$. Selon les équations (10)(11), les incidences des trajets reçus correspondant au vecteur x(t) (tel que considéré, donc, aux K instants d'échantillonnages $t_1$ à $t_K$ utilisés pour approximer la matrice de covariance) correspondent alors aux composantes non nulles du vecteur $\gamma$ où $\gamma(q_{mp}) = \gamma_{pp}{}^m$, et donc on peut en déduire que l'incidence correspondant à la $q_{mp}{}^{ème}$ composante de Best une incidence d'un trajet reçu à l'instant t, soit $\Theta_{q_{mp}} = \Theta_{mp}$. Cela est illustré sur la figure 3 qui illustre comment l'estimation du spectre parcimonieux $\gamma$ permet de déterminer quelles sont les incidences des trajets reçus parmi l'ensemble des incidences potentielles.

Dit autrement : si la $q^{ième}$ composante de $\gamma$, i.e., composante $\gamma(q)$, est déterminée, à l'issue du traitement de goniométrie parcimonieuse, comme non nulle, alors l'incidence $\Theta_q$, correspondant à la $q^{ième}$ colonne de B, $b(\Theta_q)$, est déterminée comme incidence d'un trajet reçu.

On est toutefois en présence d'un système d'équation ayant plus d'inconnues que d'équations. Pour résoudre ce système d'équations, il est alors nécessaire d'exploiter la parcimonie du vecteur $\gamma$. Pour cela, on ajoute au critère classique des moindres carrés une régularisation ou pénalité $\Phi(\lambda, \gamma)$ qui a pour objectif de favoriser la parcimonie de la solution devant contenir beaucoup de composantes nulles. Le critère à minimiser suivant le vecteur x a la forme suivante :

[Math. 17]

$$J_{\Phi}\left(\lambda, \mathbf{x}\right) = \frac{1}{2}\left\|\mathbf{y} - \mathbf{B}\mathbf{x}\right\|^2 + \Phi\left(\lambda, \mathbf{x}\right)$$

Le poids relatifs des deux termes est réglé par un paramètre de régularisation $\lambda$ afin de garantir la relation $J_{\phi}(\lambda, \mathbf{x})$ >$J_{\phi}(\lambda, y)$ pour tous vecteurs x. Selon les résultats exposés dans « Goniométrie parcimonieuse de sources radio-électriques : modèles, algorithmes et mises en oeuvre robustes », Alice Delmer, thèse de doctorat, Université Paris-Saclay, Décembre 2021, ce poids peut être fixé a priori à partir de la limite de résolution du réseau de capteurs virtuels de réponse b($\Theta$). La pénalité $\Phi(\lambda, x)$ a pour expression :

[Math. 18]

$$\Phi\left(\lambda, \mathbf{x}\right) = \sum_{q=1}^{Q} \varphi\left(\lambda, \mathbf{x}\left(q\right)\right) \text{ avec } \begin{cases} \varphi\left(\lambda, 0\right) = 0 \\ \varphi\left(\lambda, x \neq 0\right) > 0 \end{cases}$$

Les pénalités CELO et la pénalité $l_0$ (la pénalité $l_0$ étant définie comme la norme $l_0$ multipliée par $\lambda$) utilisées dans la thèse indiquée ci-dessus ont pour point commun de vérifier $\varphi(\lambda, |x| > \varepsilon) = \lambda$. Dans le cas de $l_0$, la valeur de $\varepsilon$ tend vers 0 alors que, dans le cas de CELO, la fonction est plus large au voisinage de 0. D'autres pénalités possédant les mêmes propriétés ont été proposées dans la littérature.

L'algorithme d'estimation du vecteur $\gamma$ est itératif avec une initialisation avec le vecteur $x^0$. La relation de récurrence entre deux étapes de l'algorithme est la suivante :

[Math. 19]

$$\mathbf{x}^{(i)} = prox_{\phi, \lambda\beta}\left(\mathbf{x}^{(i-1)} - \beta\mathbf{B}^H\left(\mathbf{y} - \mathbf{B}\mathbf{x}^{(i-1)}\right)\right) \text{ avec } \beta < 1/\left\|\mathbf{B}^H\mathbf{B}\right\|$$

où $prox_{\phi, \lambda, \beta}(.)$ est le proximal de la pénalité.

Dans le cas de $l_0$ et CELO, l'opérateur proximal vérifie :

cas de $l_0$ :

$$prox_{\phi, \lambda\beta}\left(\mathbf{x}\right) = \begin{cases} x_g \text{ si } \left|x_g\right| \geq \sqrt{\lambda\beta} \\ 0 \text{ sinon} \end{cases}$$

cas de CELO :

$$prox_{\phi, \lambda\beta}\left(\mathbf{x}\right) = \begin{cases} 0 \text{ si } x_g = 0 \\ \dfrac{x_g}{\left|x_g\right|} \min\left(\left|x_g\right|, \dfrac{\left(\left|x_g\right| - \sqrt{2\lambda}\beta\right)_+}{1-\beta}\right) \text{ sinon} \end{cases}$$

avec $(.)_+ = \max(0,.)$.

Les étapes d'estimation du vecteur parcimonieux $\gamma$ sont résumées ci-dessous :

Etape A.0 : Initialisation par le vecteur $x^0$ et i=0

Etape A.1 : Calcul de **u** = **x** $^{(i-1)}$ - $\beta$**B**$^H$(**y**$^{(i-1)}$ - **Bx**) (correspondant à une descente de gradient sur les moindres carrés)
Etape A.2 : Mise à jour du vecteur avec le proximal **x**$^{(i)}$ = $prox_{\phi,\lambda,\beta}$(**u**)
Etape A.3 : Si $\|$**y** - **Bx**$^{(i)}\|$ > $\varepsilon$ retour à l'étape A.1 avec i= i +1.

La valeur de $\varepsilon$ correspond à la précision d'estimation voulue. Elle peut être reliée à un niveau de bruit moyen s'il est connu. D'autres critères d'arrêts sont aussi possibles, comme par exemple un nombre maximum d'itérations ou la décroissance du critère entre deux itérations.
La pénalité CELO permet d'initialiser avec x$^0$=0 contrairement à $l_0$ dans le cas général à cause de la présence de minima locaux. Les étapes d'estimation du vecteur parcimonieux $\gamma$ peuvent être réalisées avec d'autres pénalités de la littérature comme MCP. Il est également envisageable d'utiliser des schémas plus complexes basés sur ces étapes simples : pénalité ou proximal variant dans le temps, paramètres dépendant des itérations, moyennage du vecteur sur plusieurs itérations...

Processus de goniométrie parcimonieuse en présence de trajets corrélés

En considérant maintenant que des trajets provenant d'un même émetteur 4 sont corrélés entre eux, l'approche proposée par l'invention est d'utiliser le modèle provenant des équations (9)-(11) :

[Math. 20]

$$\mathbf{y} = vec\left(\mathbf{R}_x\right) - \sigma^2 vec\left(\mathbf{I}_N\right) = \mathbf{B}\boldsymbol{\gamma} + \mathbf{e}$$

$$\text{avec } \mathbf{e} = \sum_{m=1}^{M}\sum_{i\neq j}\gamma_{ij}^{\,m}\mathbf{a}^*\left(\Theta_{mj}\right)\otimes\mathbf{a}\left(\Theta_{mi}\right)$$

où l'observation y est entachée par le vecteur bruit e dont le niveau dépend des termes d'intercorrélation des trajets. Avec le modèle de l'équation (20), dans un mode de réalisation de l'invention, les étapes A.i, i = 0 à 3, de l'algorithme présenté ci-dessus sont appliquées pour estimer le vecteur $\gamma$ avec la table de calibration B (en supposant donc que les trajets soient décorrélés). On obtient ainsi un vecteur $\hat{\gamma}$ erroné permettant de déduire selon (10)(11) une première estimation des incidences des trajets $\hat{\Theta}_{mp}$ pour $1 \leq m \leq M$ et $1 \leq p \leq P_m$. Un complément de table de calibration $\Delta$B est alors construit, contenant les termes croisés a*($\Theta_i$) $\otimes$ a($\Theta_j$), avec $i \neq j$, pour un ensemble d'incidences sélectionnées en fonction des incidences estimées $\hat{\Theta}_{mp}$. par exemple celles des incidences se trouvant dans un voisinage prédéfini desdites incidences estimées $\hat{\Theta}_{mp}$. Les dimensions du voisinage selon un compromis retenu entre complexité des calculs et performance. Dans un mode de réalisation, $\Delta$B est construite uniquement les incidences estimées précédemment, la précision des estimations finales étant alors dégradée par rapport aux modes de réalisation avec prise en compte des voisinages.
Le voisinage prédéfini s'exprime par exemple en termes de nombre de points en direction dans le lobe à 3dB du réseau virtuel de réponse a*($\Theta_i$) $\otimes$ a($\Theta_j$),
**[0060]** Le modèle de l'équation (20) devient alors

[Math. 21]

$$\mathbf{y} = \tilde{\mathbf{B}}\tilde{\boldsymbol{\gamma}} \quad \text{avec } \left\{ \tilde{\mathbf{B}} = \begin{bmatrix} \mathbf{B} & \Delta\mathbf{B} \end{bmatrix} \quad \text{et } \tilde{\boldsymbol{\gamma}} = \begin{bmatrix} \boldsymbol{\gamma} \\ \boldsymbol{\rho} \end{bmatrix} \right.$$

où $\gamma$ est un vecteur parcimonieux ayant pour composantes non nulles les termes de puissance $\gamma_{pp}^{m}$ des trajets aux indices correspondant à la présence de sources, et des termes nuls sinon et $\rho$ est un vecteur parcimonieux également, ayant pour seules composantes non nulles les termes d'intercorrélation $\gamma_{pq}^{m}$ des trajets (p $\neq$q).
Dans une deuxième étape, le vecteur $\tilde{\gamma}$ est estimé cette fois avec la table de calibration étendue $\tilde{\mathbf{B}}$ pour en extraire une meilleure estimation de $\gamma$ et il est déterminé selon les équations (10)(11) une meilleure estimation des incidences $\Theta_{mp}$ pour $1 \leq m \leq M$ et $1 \leq p \leq P_m$. (le nombre de trajets total estimé peut en effet changer dans le cas où il y a des sources ou trajets proches (en terme d'incidence) qui ne sont au départ pas résolues et qu'on arrive ensuite à séparer en ayant amélioré le modèle. M et Pm n'étant pas connus a priori, le nombre de composantes non nulles détectées peut donc varier).

Sans ce procédé en deux étapes, le complément de table de calibration $\Delta$B devrait contenir les produits croisés pour toutes les incidences $\Theta_q$, c'est-à-dire un nombre de $\binom{Q}{2}$ colonnes. Pour $Q = 22 * 90$, c'est-à-dire un pas de grille de 4° selon les deux angles, cela représente alors près de 2 millions de colonnes. Si l'on choisit uniquement le voisinage des incidences estimées en étape 1, par exemple les incidences estimées et leurs 8 plus proches voisins, on aura au maximum un complément de table de calibration avec $\binom{9 \times \sum P_m}{2}$, soit un peu plus de 20000 colonnes si l'on considère le nombre maximum $\Sigma P_m = 23$ : on a alors divisé le nombre de colonnes à ajouter par 100.

Des hypothèses supplémentaires, considérant par exemple le modèle de propagation HF, peuvent être ajoutées pour réduire encore le nombre de produit croisés, comme par exemple un écart de gisement maximum entre les deux directions considérées.

Dans un mode de réalisation de l'invention illustré en figure 4, un procédé 100 utilisant cette approche est mis en oeuvre par le bloc de traitement 50 ; ce procédé 100 comprend ainsi les étapes B.0 à B.6 détaillées ci-après.

Dans une étape B.0, le bloc de traitement calcule $R_x$ en fonction des signaux $x(t)$ en sortie des N antennes et en déduit y à l'aide de la formule suivante :

$$\mathbf{y} = vec(\mathbf{R}_x) - \sigma^2 vec(\mathbf{I}_N).$$

Puis, dans une étape B.1, une première estimation du vecteur $\gamma$ est réalisée par résolution de $\mathbf{y} = vec(\mathbf{R}_x) - \sigma^2 vec(\mathbf{I}_N) = \mathbf{B}\gamma$ par goniométrie parcimonieuse, en appliquant par exemple le processus comprenant les étapes décrites plus haut A.0, A.1, A.2 et A.3, avec la table de calibration B pour obtenir cette première estimation, nommée $\hat{\gamma}$

Dans une étape B.2, une première estimation des incidences $\{\hat{\Theta}_{mp}\}$ des trajets reçus (correspondant à x(t) pour les K instants d'échantillonnage considérés) est déduite, à partir du vecteur $\hat{\gamma}$, et selon les équations (10)(11) : les incidences des trajets reçus sont déterminées comme celles correspondant aux seules composantes non nulles de $\hat{\gamma}$, i.e. si la $q^{ème}$ composante de $\hat{\gamma}$ est non nulle (nommée $q_{mp}$), alors l'incidence $\Theta_{mp}$ correspondant à la $q^{ème}$ colonne de B, $b(\Theta_q = \Theta_{mp})$ est estimée comme incidence d'un trajet reçu. A l'inverse, les incidences correspondant aux composantes nulles de $\hat{\gamma}$ ne font pas partie des incidences des trajets reçus.

Dans une étape B.3, la table de calibration complémentaire suivante est construite :
$\Delta$B = [a*($\Theta_i$) $\otimes$ a($\Theta_j$) ... ], contenant uniquement les termes croisés a*($\Theta_i$) $\otimes$ a($\Theta_j$), avec $i \neq j$, pour un ensemble d'incidences dans le voisinage prédéfini des incidences estimées $\hat{\Theta}_{mp}$.

La prise en compte dans $\Delta$B uniquement des incidences estimées et des incidences dans leur seul voisinage (éventuellement de taille 0) permet de réduire le nombre des incidences potentielles à considérer, en n'en considérant qu'un sous-ensemble de taille ainsi très diminuée.

Dans une étape B.4, une deuxième estimation du vecteur $\gamma$ est réalisée en résolvant par goniométrie parcimonieuse, quel vecteur $\tilde{\gamma}$ vérifie :

$$\mathbf{y} = \tilde{\mathbf{B}}\tilde{\gamma} \quad \text{avec} \left\{ \tilde{\mathbf{B}} = \begin{bmatrix} \mathbf{B} & \Delta\mathbf{B} \end{bmatrix} \text{ et } \tilde{\gamma} = \begin{bmatrix} \gamma \\ \rho \end{bmatrix} \right.$$

où y a été calculé en B.0 ; la résolution parcimonieuse est par exemple effectuée en appliquant le processus comprenant les étapes décrites plus haut A.0, A.1, A.2 et A.3.

Ceci permet d'obtenir le vecteur $\begin{bmatrix} \gamma \\ \rho \end{bmatrix}$ et d'en extraire une deuxième estimation du vecteur $\gamma$.

Dans une étape B.5 et similairement à l'étape B.2, une deuxième estimation des incidences $\{\hat{\Theta}_{mp}\}$ des trajets reçus est déduite, en fonction de la deuxième estimation du vecteur $\gamma$, et selon les équations (10)(11).

Dans une étape B.6, si $\|\mathbf{y} - \tilde{\mathbf{B}}\tilde{\gamma}\| > \eta$ alors retour à l'étape B.3 (en prenant comme premières estimations des incidences de cette nouvelle itération de B.3 et B.4, les deuxièmes estimations des incidences déterminées à l'itération courante) ; sinon les incidences des trajets estimées en B.5 sont considérées comme estimations finales. La valeur du seuil $\eta$ est prédéfinie en fonction d'un compromis précision d'estimation/volume et rapidité des calculs exécutés. Par exemple, le seuil $\eta$ est relié à un niveau de bruit moyen.

Ces directions d'arrivée $\{\hat{\Theta}_{mp}\}$ estimées sont ensuite exploitées, par exemple pour localiser les émetteurs 4, ce qui est utilisé par le bloc de traitement 50 ou un autre dispositif électronique, dans le contrôle du spectre, la gestion des télécommunications, le suivi des porteurs d'émetteur (recherche de victimes enfouies après des catastrophes naturelles, protection d'espèces animales ...).

Le procédé peut être mis en oeuvre par l'exécution d'instructions logicielles sur un processeur comme décrit plus haut à titre d'exemple. Alternativement, il peut être mis en oeuvre par un hardware dédié, typiquement un circuit intégré numérique, soit spécifique (ASIC) ou basé sur une logique programmable (par exemple FPGA/Field Programmable Gate Array).

**Revendications**

1. Procédé de détermination de la direction d'arrivée des trajets de signaux sur un réseau (2) de N capteurs (3), avec $N \geq 2$ et selon lequel :
ledit procédé est mis en oeuvre par un dispositif électronique (50) de détermination de la direction d'arrivée des trajets et comprend les étapes suivantes, dans une première phase :

   - i.1/ première estimation, par goniométrie parcimonieuse, du vecteur $\gamma$ vérifiant l'équation :

$$vec(\mathbf{R}_x) - \sigma^2 vec(\mathbf{I}_N) = \mathbf{B}\gamma$$

où $\mathbf{I}_N$ est la matrice identité de taille NxN, $\sigma^2$ est le niveau du bruit et $R_x$ est la matrice de covariance vectorisée du signal x(t) considéré en sortie du réseau de capteurs, avec, si $x_n(t)$ est le signal en sortie du $n^{ième}$ capteur :

$$\mathbf{x}(t) = \begin{bmatrix} x_1(t) \\ \vdots \\ x_N(t) \end{bmatrix};$$

et B est la table de calibration du réseau, telle que, le vecteur $\mathbf{a}(\Theta)$, de dimension $N$X1, étant la réponse, connue, du réseau de capteurs à un signal reçu de direction d'arrivée $\Theta$ et Q étant le nombre maximum de directions d'arrivée distinctes possibles considérées :

$$\mathbf{B} = \begin{bmatrix} \mathbf{b}(\Theta_1) & \cdots & \mathbf{b}(\Theta_Q) \end{bmatrix}$$

avec

$$\mathbf{b}(\Theta) = \mathbf{a}^*(\Theta) \otimes \mathbf{a}(\Theta)$$

   - i.2/ dans une première estimation des directions d'arrivée des trajets, si la q$^{ème}$ composante de la première estimation du vecteur $\gamma$ est non nulle, alors la direction d'arrivée $\Theta_q$ correspondant à la q$^{ème}$ composante, $b(\Theta_q)$, de B est estimée comme direction d'arrivée d'un trajet reçu ;

ledit procédé étant **caractérisé en ce qu'**il comprend en outre, dans une deuxième phase, les étapes suivantes :

   - j.1/ deuxième estimation par goniométrie parcimonieuse du vecteur $\gamma$ en estimant cette fois par goniométrie parcimonieuse le vecteur $\tilde{\gamma}$ vérifiant l'équation :

$$vec(R_x) - \sigma^2 vec(I_N) = \tilde{B}\tilde{\gamma}$$

avec

$$\tilde{\mathbf{B}} = \begin{bmatrix} \mathbf{B} & \Delta\mathbf{B} \end{bmatrix} \text{ et } \tilde{\gamma} = \begin{bmatrix} \gamma \\ \rho \end{bmatrix}$$

$\Delta B = [a^*(\Theta_i) \otimes a(\Theta_j) \ldots ]$, composée des termes croisés $a^*(\Theta_i) \otimes a(\Theta_j)$, avec $i \neq j$, pour un ensemble de directions d'arrivée sélectivement définies en fonction des directions d'arrivée estimées, à l'étape i.2, comme direction d'arrivée d'un trajet reçu ;

- j.2/ dans une deuxième estimation des directions d'arrivée des trajets, pour chaque composante non nulle de la deuxième estimation du vecteur $\gamma$, une direction d'arrivée de trajets est déterminée de la façon suivante :

si la q^{ème} composante de la deuxième estimation de $\gamma$ est non nulle, alors l'incidence $\Theta_q$ correspondant à la q^{ème} composante de B, $b(\Theta_q)$, est estimée comme direction d'arrivée d'un trajet reçu.

2. Procédé de détermination de la direction d'arrivée des trajets de signaux sur un réseau (2) de N capteurs (3) selon la revendication 1, selon lequel $\Delta B = [a^*(\Theta_i) \otimes a(\Theta_j) \ldots ]$ est composée des termes croisés $a^*(\Theta_i) \otimes a(\Theta_j)$, avec $i \neq j$, pour un ensemble de directions d'arrivée sélectivement définies en fonction d'un voisinage prédéfini des directions d'arrivée estimées, à l'étape i.2, comme direction d'arrivée d'un trajet reçu.

3. Procédé de détermination de la direction d'arrivée des trajets de signaux sur un réseau de N capteurs selon la revendication 1 ou 2, selon lequel il est déterminé à l'issue de l'étape j.2 de l'itération courante si :

$$\left\| \mathbf{y} - \tilde{\mathbf{B}}\tilde{\gamma} \right\| > \eta$$

où

$$\mathbf{y} = vec(\mathbf{R}_x) - \sigma^2 vec(\mathbf{I}_N)$$

la valeur de la constante $\eta$ étant prédéfinie et si cette condition n'est pas vérifiée, une nouvelle itération des étapes j.1 et j.2 est effectuée, en prenant comme première estimation des directions d'arrivée de la nouvelle itération la deuxième estimation des directions d'arrivée déterminée à l'itération courante.

4. Procédé de détermination de la direction d'arrivée des trajets de signaux sur un réseau de N capteurs selon l'une quelconque des revendications précédentes, selon lequel l'estimation de la direction d'arrivée comprend l'estimation d'un angle d'élévation et d'un angle de gisement.

5. Procédé de détermination de la direction d'arrivée des trajets de signaux sur un réseau de N capteurs selon l'une quelconque des revendications précédentes, comprenant au moins une des dispositions suivantes :

- le nombre de trajets est supérieur au nombre N de capteurs ;
- des trajets sont corrélés temporellement entre eux.

6. Programme d'ordinateur, destiné à être stocké dans la mémoire d'un bloc électronique de traitement (50) et comprenant en outre un microcalculateur, ledit programme d'ordinateur comprenant des instructions qui, lorsqu'elles sont exécutées sur le microcalculateur, mettent en oeuvre les étapes d'un procédé de détermination de la direction d'arrivée des trajets de signaux sur un réseau de N capteurs selon l'une des revendications précédentes.

7. Dispositif électronique (50) de détermination de la direction d'arrivée des trajets sur un réseau de N capteurs, avec $N \geq 2$, ledit dispositif étant adapté, dans une première phase, pour déterminer une première estimation, par goniométrie parcimonieuse, du vecteur $\gamma$ vérifiant l'équation :

$$vec(\mathbf{R}_x) - \sigma^2 vec(\mathbf{I}_N) = \mathbf{B}\gamma$$

où $\mathbf{I}_N$ est la matrice identité de taille NxN, $\sigma^2$ est le niveau du bruit et $\mathbf{R}_x$ est la matrice de covariance vectorisée du signal x(t) considéré en sortie du réseau de capteurs, avec, si $x_n(t)$ est le signal en sortie du n^{ième} capteur :

$$\mathbf{x}(t) = \begin{bmatrix} x_1(t) \\ \vdots \\ x_N(t) \end{bmatrix} ;$$

et B est la table de calibration du réseau, telle que, le vecteur $\mathbf{a}(\Theta)$, de dimension $NX1$, étant la réponse, connue, du réseau de capteurs à un signal reçu de direction d'arrivée $\Theta$ et Q étant le nombre maximum de directions d'arrivée distinctes possibles considérées :

$$\mathbf{B} = \left[ \mathbf{b}(\Theta_1) \quad \cdots \quad \mathbf{b}(\Theta_Q) \right]$$

avec

$$\mathbf{b}(\Theta) = \mathbf{a}^*(\Theta) \otimes \mathbf{a}(\Theta)$$

ledit dispositif (50) étant alors adapté pour, dans ladite première phase, dans une première estimation des directions d'arrivée des trajets, si la q$^{\text{ème}}$ composante de la première estimation du vecteur $\gamma$ est non nulle, estimer alors la direction d'arrivée $\Theta_q$ correspondant à la q$^{\text{ème}}$ composante, $b(\Theta_q)$, de B comme direction d'arrivée d'un trajet reçu ;
ledit dispositif (50) étant **caractérisé en ce qu'**il est adapté pour, dans une deuxième phase, déterminer une deuxième estimation du vecteur $\gamma$ par goniométrie parcimonieuse, en estimant cette fois par goniométrie parcimonieuse le vecteur $\tilde{\gamma}$ vérifiant l'équation :

$$vec(R_x) - \sigma^2 vec(I_N) = \tilde{B}\tilde{\gamma}$$

avec

$$\tilde{\mathbf{B}} = \left[ \mathbf{B} \quad \Delta\mathbf{B} \right] \quad \text{et } \tilde{\gamma} = \begin{bmatrix} \gamma \\ \rho \end{bmatrix}$$

$\Delta B = [a^*(\Theta_i) \otimes a(\Theta_j) ... ]$, composée des termes croisés $a^*(\Theta_i) \otimes a(\Theta_j)$, avec $i \neq j$, pour un ensemble de directions d'arrivée sélectivement définies en fonction des directions d'arrivée estimées, dans la première phase, comme direction d'arrivée d'un trajet reçu ;
ledit dispositif (50) est adapté pour, dans ladite deuxième phase, déterminer, dans une deuxième estimation des directions d'arrivée des trajets, pour chaque composante non nulle de la deuxième estimation du vecteur $\gamma$, une direction d'arrivée de trajets de la façon suivante :
si la q$^{\text{ème}}$ composante de la deuxième estimation de $\gamma$ est non nulle, alors l'incidence $\Theta_q$ correspondant à la q$^{\text{ème}}$ composante de B, $b(\Theta_q)$, est estimée comme direction d'arrivée d'un trajet reçu.

8. Dispositif (50) de détermination de la direction d'arrivée des trajets selon la revendication 7, dans lequel $\Delta B = [a^*(\Theta_i) \otimes a(\Theta_j) ... 1$ est composée des termes croisés $a^*(\Theta_i) \otimes a(\Theta_j)$, avec $i \neq j$, pour un ensemble de directions d'arrivée sélectivement définies en fonction d'un voisinage prédéfini des directions d'arrivée estimées, dans ladite première estimation des directions d'arrivée des trajets en ladite première phase, comme direction d'arrivée d'un trajet reçu.

9. Dispositif (50) de détermination de la direction d'arrivée des trajets de signaux sur un réseau de N capteurs selon la revendication 7 ou 8, adapté pour déterminer à l'issue de ladite deuxième estimation des directions d'arrivée des trajets de l'itération courante si :

$$\left\| \mathbf{y} - \tilde{\mathbf{B}}\tilde{\gamma} \right\| > \eta$$

où

$$\mathbf{y} = vec(\mathbf{R}_x) - \sigma^2 vec(\mathbf{I}_N)$$

la valeur de la constante $\eta$ étant prédéfinie et si cette condition n'est pas vérifiée, le dispositif effectue une nouvelle itération de la deuxième phase, en prenant comme première estimation des directions d'arrivée de la nouvelle itération la deuxième estimation des directions d'arrivée déterminée à l'itération courante.

**10.** Dispositif (50) de détermination de la direction d'arrivée des trajets de signaux sur un réseau de N capteurs selon l'une quelconque des revendications précédentes 7 à 9, dans lequel l'estimation de la direction d'arrivée par ledit dispositif comprend l'estimation d'un angle d'élévation et d'un angle de gisement.

[Fig. 1]

[Fig. 2]

[Fig. 3]

[Fig. 4]

100

**B.0**

Obtention $x(t)$ et calcul de $\mathbf{y} = vec(\mathbf{R}_x) - \sigma^2 vec(\mathbf{I}_N)$

**B.1**

Première estimation, par goniométrie parcimonieuse, du vecteur $\gamma$ vérifiant

$$\mathbf{y} = vec(\mathbf{R}_x) - \sigma^2 vec(\mathbf{I}_N) = \mathbf{B}\gamma$$

**B.2**

Première estimation des incidences $\{\hat{\Theta}_{mp}\}$ en fonction de la première estimation du vecteur $\gamma$

**B.3**

Construction, en fonction de cette première estimation des incidences, de la table de calibration complémentaire $\Delta B$, avec

$$\Delta\mathbf{B} = \left[ \mathbf{a}^{\cdot}\left(\hat{\Theta}_{12}\right) \otimes \mathbf{a}\left(\hat{\Theta}_{11}\right) \quad \cdots \quad \mathbf{a}^{\cdot}\left(\hat{\Theta}_{mj}\right) \otimes \mathbf{a}\left(\hat{\Theta}_{mi}\right) \quad \cdots \right] \quad i \neq j$$

**B.4**

Deuxième estimation, par goniométrie parcimonieuse, du vecteur $\gamma$ vérifiant

$$\mathbf{y} = \tilde{\mathbf{B}}\tilde{\gamma} \quad \text{avec} \left\{ \tilde{\mathbf{B}} = \begin{bmatrix} \mathbf{B} & \Delta\mathbf{B} \end{bmatrix} \text{ et } \tilde{\gamma} = \begin{bmatrix} \gamma \\ \rho \end{bmatrix} \right.$$

**B.5**

Deuxième estimation des incidences $\{\hat{\Theta}_{mp}\}$, en fonction de la deuxième estimation du vecteur $\gamma$

**B.6**

$$\left\| \mathbf{y} - \tilde{\mathbf{B}}\tilde{\gamma} \right\| > \eta \ ?$$

non

oui

Europäisches
Patentamt

European
Patent Office

Office européen
des brevets

# RAPPORT DE RECHERCHE EUROPEENNE

Numéro de la demande

EP 24 20 0598

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | Alice Delmer: "Goniométrie parcimonieuse de sources radioélectriques : modèles, algorithmes et mises en oeuvre robustes", , 6 décembre 2021 (2021-12-06), XP093159276, Extrait de l'Internet: URL:https://theses.hal.science/tel-03518731v1/preview/104209_DELMER_2021_diffusion.pdf#page=2 * figures 1.1, 1.2, 3.1-3.4 * * chapitres: 1 Introduction; 2 État de l'art des méthodes parcimonieuses en goniométrie; 3.2 Modèle SMV pour le contexte aéroporté; 3.3 Modèle SMV pour le contexte urbain. * ----- | 1-10 | INV. G01S3/74 G01S3/80 |
| A | HUI CHEN ET AL: "Robust DOA Estimation for Uncorrelated and Coherent Signals", IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E94.A, no. 10, 1 octobre 2011 (2011-10-01), pages 2035-2038, XP001570658, ISSN: 0916-8508, DOI: 10.1587/TRANSFUN.E94.A.2035 [extrait le 2011-10-01] * sections: 1. Introduction; 2. Signal Model; 3. Proposed Algorithm. * ----- | 1-10 | |
| A | US 2003/052820 A1 (FERREOL ANNE [FR]) 20 mars 2003 (2003-03-20) * figures 1-3,6 * * alinéas [0001] - [0147] * ----- | 1-10 | |

DOMAINES TECHNIQUES RECHERCHES (IPC)

G01S

-/--

Le présent rapport a été établi pour toutes les revendications

| Lieu de la recherche | Date d'achèvement de la recherche | Examinateur |
|---|---|---|
| Munich | 5 février 2025 | Tancredi, Urbano |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 24 20 0598

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | DELMER ALICE ET AL: "On Regularization Parameter for L0-Sparse Covariance Fitting Based DOA Estimation", ICASSP 2020 - 2020 IEEE INTERNATIONAL CONFERENCE ON ACOUSTICS, SPEECH AND SIGNAL PROCESSING (ICASSP), IEEE, 4 mai 2020 (2020-05-04), pages 4552-4556, XP033793609, DOI: 10.1109/ICASSP40776.2020.9053963 * sections: 1. Introduction; 2. Model and Problem Formulation. * ----- | 1-10 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 5 février 2025 | Tancredi, Urbano |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
...............................................................................
& : membre de la même famille, document correspondant

EPO FORM 1503 03.82 (P04C02)

**EP 4 528 308 A1**

## ANNEXE AU RAPPORT DE RECHERCHE EUROPEENNE
## RELATIF A LA DEMANDE DE BREVET EUROPEEN NO.

EP 24 20 0598

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-02-2025

| Document brevet cité au rapport de recherche | Date de publication | Membre(s) de la famille de brevet(s) | | Date de publication |
|---|---|---|---|---|
| US 2003052820 A1 | 20-03-2003 | AT | E450804 T1 | 15-12-2009 |
| | | CA | 2382313 A1 | 27-10-2002 |
| | | EP | 1253435 A1 | 30-10-2002 |
| | | FR | 2824145 A1 | 31-10-2002 |
| | | US | 2003052820 A1 | 20-03-2003 |

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Goniométrie parcimonieuse de sources radio-électriques : modèles, algorithmes et mises en oeuvre robustes. **ALICE DELMER**. thèse de doctorat. Université Paris-Saclay, December 2021